(19) Europäisches Patentamt
European Patent Office
Office européen des brevets

(11) EP 4 606 851 A1

(12) **EUROPEAN PATENT APPLICATION**
published in accordance with Art. 153(4) EPC

(43) Date of publication:
**27.08.2025 Bulletin 2025/35**

(21) Application number: **23888795.4**

(22) Date of filing: **10.11.2023**

(51) International Patent Classification (IPC):
***C08L 21/00*** *(2006.01)* ***C08J 3/20*** *(2006.01)*
***C08K 5/544*** *(2006.01)* ***C08K 5/548*** *(2006.01)*
***C08L 1/02*** *(2006.01)* ***C08L 23/00*** *(2006.01)*
***C08L 25/00*** *(2006.01)*

(52) Cooperative Patent Classification (CPC):
**C08J 3/20; C08K 5/544; C08K 5/548; C08L 1/00; C08L 1/02; C08L 21/00; C08L 23/00; C08L 25/00;**
Y02T 10/86; Y02W 30/62

(86) International application number:
**PCT/JP2023/040620**

(87) International publication number:
**WO 2024/101450 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 JP 2022181237**

(71) Applicant: **Chuetsu-Pulp and Paper Co., Ltd**
**Tokyo 104-0061 (JP)**

(72) Inventor: **HASHIBA Hiromi**
**Takaoka-shi Toyama 933-8533 (JP)**

(74) Representative: **Murgitroyd & Company**
**165-169 Scotland Street**
**Glasgow G5 8PL (GB)**

(54) **RUBBER COMPOSITION**

(57) The present invention provides a rubber composition containing a natural nano-polymer which has favorable interface adhesiveness with a rubber and has high dispersibility in the rubber, and a method for producing the same. The rubber composition contains (A) a rubber component, (B-1) a molten mixture containing a natural nano-polymer, and (C) a silane coupling agent having a mercapto group and a silane coupling agent having an amino group. The rubber composition of the present invention provides a molten mixture containing a natural nano-polymer which has favorable interface adhesiveness with the rubber and has high dispersibility in the rubber, and a rubber product obtained by crosslinking the molten mixture.

[FIG. 1]

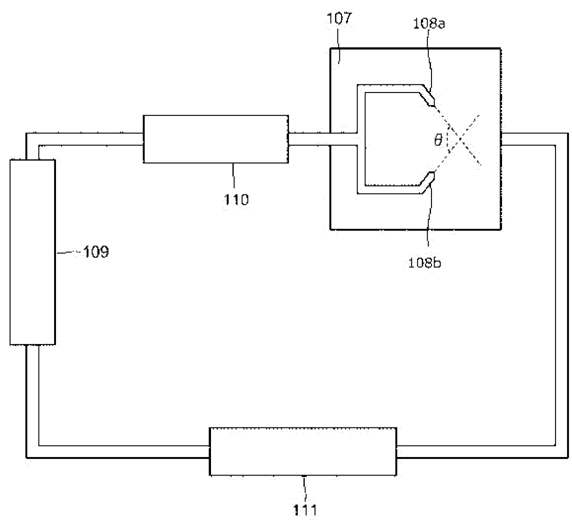


EP 4 606 851 A1

## Description

Technical Field

The present invention relates to a rubber composition containing a molten mixture which contains a cellulose fiber or a natural nano-polymer, and a method for producing the same.

Background Art

In general, a rubber often refers to a material having a high elastic limit and a low elastic modulus, that is, refers to an elastic rubber, which contains an organic polymer as a main component, such as natural rubber and synthetic rubber. A composition containing the rubber (rubber composition) has been widely used for industrial applications such as tires, sealing materials, and vibration-proof materials. In addition, in order to obtain more preferred performance by utilizing the characteristics of the rubber, various components are used as an additive of the rubber composition.

For example, Patent Document 1 discloses a technique related to a rubber/short fiber master batch which is obtained by stirring and mixing an aqueous dispersion liquid of short fibers having an average diameter of less than 0.5 μm and rubber latex, and then spraying and drying the mixed solution in an atmosphere of a shock wave by pulse combustion.

In addition, Patent Document 2 discloses a technique related to a rubber composition which enhances dispersibility and adhesiveness of a reinforcing material consisting of a cellulose-based fiber to a rubber component and exhibits sufficient durability and rigidity, and a method for producing the same.

These patent documents indicate that the cellulose-based fiber is useful as the additive of the rubber composition.

However, there is still room for improvement in terms of enhancing adhesiveness at an interface between the rubber and the cellulose-based fiber and improving dispersibility of the cellulose-based fiber in the rubber.

In addition, there is still room for improvement in crosslinking characteristics, workability, mechanical strength, and the like of the rubber composition and a rubber product obtained by crosslinking the rubber composition.

Citation List

Patent Documents

Patent Document 1: Japanese Patent Application Laid-Open No. 2006-206864
Patent Document 2: Japanese Patent Application Laid-Open No. 2009-191198

Non-Patent Document

Non-Patent Document 1: Powder Fluidity Measurement Method, Journal of the Japanese Society of Radiological Technology, Vol. 46, No. 6, pp. 472 to 477

Summary of the Invention

Problems to be solved by the Invention

In view of the above-described problems in the related art, an object of the present invention is to provide a rubber composition having high dispersibility of a molten mixture containing a natural nano-polymer or a cellulose fiber in a rubber and favorable interface adhesiveness between the rubber and the molten mixture containing the natural nano-polymer or the cellulose fiber, and a method for producing the same.

As a result of intensive studies to achieve the above-described objects, the present inventors have found that the above-described objects can be achieved by a rubber composition that is obtained by mixing a mixture containing a natural nano-polymer and a solvent with a molten mixture obtained by molten-mixing an aqueous dispersion of a polyolefin resin which contains at least a polyolefin and water or with a styrene-based polymer having a weight-average molecular weight in a specific range, and a silane coupling agent, or obtained by mixing a cellulose fiber having a specific bulk specific gravity and an average particle diameter with a rubber.

## Means for solving the Problems

That is, a rubber composition according to an aspect of the present invention contains (A) a rubber component, (B-1) a molten mixture containing a natural nano-polymer, and (C) a silane coupling agent having a mercapto group.

## Advantageous Effect of the Invention

According to the present invention, there are provided a rubber composition having high dispersibility of a molten mixture containing a natural nano-polymer or a cellulose fiber in a rubber and favorable interface adhesiveness between the rubber and the molten mixture containing the natural nano-polymer or the cellulose fiber, and a method for producing the same.

## Brief Description of the Drawings

FIG. 1 is a conceptual view of a CNF production (defibrillation treatment) device.

## Mode for carrying out the Invention

Hereinafter, the present invention will be described in more detail based on examples. The present invention is not limited to the following examples.

### (Definition of terms)

In the present invention, a molten mixture is obtained by applying heat to a mixture consisting of at least a natural nano-polymer and an aqueous dispersion of a polyolefin resin or a mixture containing a natural nano-polymer and a styrene-based polymer having a weight-average molecular weight in a specific range, thereby powdering the mixture.

In the present invention, a paper powder is obtained after a treatment of finely pulverizing paper.

In the present invention, a rubber composition is a composition obtained by blending the above-described molten mixture with at least a rubber.

The present invention relates to a rubber composition containing (A) 100 parts by mass of a rubber, (B-1) 1 to 100 parts by mass of a molten mixture containing a natural nano-polymer with respect to 100 parts by mass of the rubber, and (C) 5% to 60% by mass of a silane coupling agent with respect to the molten mixture (B-1) containing a natural nano-polymer.

In addition, the present invention relates to a rubber composition containing (A) 100 parts by mass of a rubber, (B-2) 1 to 100 parts by mass of a cellulose fiber with respect to 100 parts by mass of the rubber, and (C) 5% to 60% by mass of a silane coupling agent with respect to the cellulose fiber (B-2).

### [(A) Rubber]

The rubber used in the present invention is not particularly limited; and examples thereof include natural rubber, chloroprene rubber, ethylene-propylene-non-conjugated diene copolymerized rubber, ethylene-butene-1 copolymerized rubber, ethylene-hexene copolymerized rubber, ethylene-octene copolymerized rubber, polybutadiene, styrene-butadiene block copolymerized rubber, styrene-butadiene copolymerized rubber, partially hydrogenated styrene-butadiene-styrene block copolymerized rubber, styrene-butadiene-acrylonitrile copolymerized rubber, styrene-isoprene block copolymerized rubber, partially hydrogenated styrene-isoprene block copolymerized rubber, polyurethane rubber, styrene graft-ethylenepropylene-non-conjugated diene copolymerized rubber, styrene-graft-ethylenepropylene copolymerized rubber, styrene/acrylonitrile-graft-ethylene-propylene-non-conjugated diene copolymerized rubber, styrene/acrylonitrile-graft-ethylenepropylene copolymerized rubber, chloro-sulfonated polyethylene rubber, silicone rubber, ethylene-vinyl acetate rubber, epichlorohydrin rubber, and polysulfide rubber. These rubbers can be used singly or in combination of two or more kinds thereof.

### [(B-1) Molten mixture]

The molten mixture used in the present invention is a powder obtained by applying heat to a mixture containing at least (a) a natural nano-polymer and (b-1) an aqueous dispersion of a polyolefin resin or (b-2) a polymerized substance containing, as a main component, a vinyl aromatic compound having a molecular weight in a specific range.

[(a) Natural nano-polymer]

The natural nano-polymer used in the molten mixture according to the present invention is a fibrous substance having a diameter of 1 nm or more and less than 1,000 nm; and is a natural polymer nanofiber having a length of 100 times or more the diameter, or a natural polymer nanocrystal which is a rod-like or spindle-shaped ultrafine crystal having a diameter of 10 to 50 nm and a length of 100 to 500 nm.

The natural polymer used in the present invention is not particularly limited, and examples thereof include polysaccharides such as cellulose, chitin, and chitosan, and proteins such as collagen, silk, and gelatin.

In the present invention, it is preferable to use a natural nano-polymer having a degree of crystallinity in a range of 50% or more. This is because, when a natural nano-polymer having a high degree of crystallinity is used, ability to support a resin is deteriorated due to a decrease in specific surface area of the natural nano-polymer, and ability and workability of a resin molded product (fluidity of the resin and shape retention of the resin molded product) are deteriorated due to a decrease in strength, elasticity, and thixotropy. In addition, when the degree of crystallinity is low, putrefaction is also likely to occur.

In the present invention, it is preferable to use a natural nano-polymer having an average degree of polymerization in a range of 400 to 900. This is because, in a polymer having an average degree of polymerization of higher than 900, the natural nano-polymer is entangled or curled, so that it is difficult for the polymer to function as a fiber, the polymer is likely to become a foreign substance (aggregate) inside the resin, and thus a reinforcing effect of the resin is deteriorated because the polymer does not function as a rigid fiber. When the average degree of polymerization is less than 400, rigidity of the natural fiber is lost, and thus the reinforcing effect is unlikely to occur.

Next, a method for preparing a cellulose nanofiber (hereinafter, also referred to as "CNF") and a cellulose nanocrystal aqueous solution using cellulose as the natural polymer will be described. In the present invention, examples of the CNF include CNF derived from natural plants such as wood fiber, broadleaf trees, coniferous trees, bamboo fiber, sugarcane fiber, seed hair fiber, leaf fiber, and seaweed, and polysaccharide-derived CNF containing pericarp or the like, derived from acetic acid bacteria. In addition, the CNF may be produced from crop residues derived from leaves, flowers, stems, fruits, roots, outer skins, and the like of plants, such as bagasse, rice straw, rice husk, tea husk, and squeezed pulp of fruit juice. These CNFs may be used singly or in combination of two or more kinds thereof. In addition, as the polysaccharide, pulp having an $\alpha$-cellulose content of 60% to 99% by mass is preferably used. When the $\alpha$-cellulose content as a purity is 60% by mass or more, the fiber diameter and the fiber length are easily adjusted, and the entanglement between the fibers can be suppressed. In addition, as compared with a polysaccharide having an $\alpha$-cellulose content of less than 60% by mass, thermal stability during melting is higher, an impact strength is not reduced, and an effect of suppressing coloration due to thermal decomposition of hemicellulose is favorable, and thus the effect of the present invention can be further improved. On the other hand, when a polysaccharide having an $\alpha$-cellulose content of 99% by mass or more is used, it is difficult to defibrillate the fibers to a nano level, an energy cost is increased, and thus it is difficult to adjust the fiber diameter and the fiber length.

The CNF in the present invention is obtained as a CNF dispersion liquid (hereinafter, also referred to as a CNF in a water-containing state) by performing, for example, the following defibrillation treatment.

The defibrillation treatment is performed using an aqueous counter collision method illustrated in FIG. 1 (hereinafter, also referred to as an ACC method). The ACC method is a method of introducing pulp suspended in water into two nozzles (FIG. 1: 108a and 108b) facing each other in a chamber (FIG. 1: 107), and jetting the pulp toward a point from the nozzles to cause the pulp to collide with the point. The device shown in FIG. 1 is a liquid circulation-type device, and includes a tank (FIG. 1: 109), a plunger (FIG. 1: 110), two nozzles (FIG. 1: 108a and 108b) facing each other, and a heat exchanger (FIG. 1: 111) as necessary; and fine particles dispersed in water are introduced into the two nozzles and jetted from the two nozzles (FIG. 1: 108a and 108b) facing each other at a high pressure of approximately 50 to 400 MPa to collide with each other.

In addition, a degree of fibrillation from pulp fibers to the CNF can be evaluated by a viscosity value of the CNF dispersion liquid.

In addition, since a ratio (aspect ratio) of the fiber length to the fiber diameter after defibrillation varies depending on the origin of the pulp raw material, the viscosity values of the CNF dispersion liquids vary.

Furthermore, for example, a B-type viscosity value in 1 wt% CNF dispersion liquid can be adjusted to be in a range of approximately 300 to 10,000 mPa·s by combining pulp fibers derived from different raw materials or by adjusting the above-described degree of fibrillation.

Since the CNF obtained as described above is subjected to defibrillation by preferentially cleaving an interaction between the natural cellulose fibers, the CNF has no change in structure of the cellulose molecule and has a structural formula represented by the following chemical formula 1 derived from the raw material pulp. In other words, the CNF used in the present invention means that the CNF has six hydroxyl groups in a cellobiose unit in the chemical formula 1, and is not chemically modified. This can be confirmed by comparing an IR spectrum of cellulose with the CNF used in the present invention using FT-IR. By the ACC method, the cellulose fiber can be pulverized to be an average fiber diameter of 1 $\mu$m or

less, and as a result, CNF having an average thickness of 3 to 1,000 nm and an average length of 0.1 μm or more is obtained.

The average thickness and the average fiber length are measured by appropriately selecting a scanning electron microscope (SEM), a transmission electron microscope (TEM), a scanning probe microscope (SPM), or the like, observing and measuring the CNF, selecting 20 or more from the obtained photographs, and averaging the obtained values. In the counter collision treatment, an energy to be applied is far less than an energy for breaking a covalent bond (estimated to be 1/300 or less), and thus the degree of polymerization of the cellulose is unlikely to decrease. In the cellulose nanofibers obtained by the ACC method, hydrophilic sites and hydrophobic sites coexist, and the cellulose nanofibers exhibit amphiphilicity.

[chem. 1]

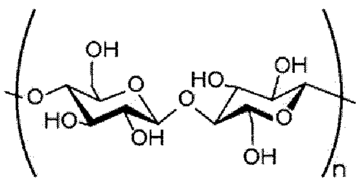

In the present invention, as the CNF dispersion liquid in the present invention, cellulose nanofibers obtained by a method of a chemical treatment such as a TEMPO oxidation catalyst, a phosphoric acid esterification treatment, an ozone treatment, an enzyme treatment, a maleic acid treatment, hydrophobic modification with an anhydride of alkenyl succinic acid, hydrophobic modification with an alkyl ketene dimer, or hydrophobic modification with acetylation, which is known as another method for producing cellulose nanofibers, or cellulose nanofibers obtained by a physical method of making cellulose-based fibers thin by wet pulverization using mechanical action such as a grinder (stone mill type pulverizer), a disk type refiner, a conical refiner, a high-pressure homogenizer, a beads mill, a wet explosion crushing method, an ultrasonic disintegration method, a kneading method, or a freeze crushing method can also be used. In addition, cellulose nanofibers obtained by a method of using the chemical treatment and the physical treatment in combination can also be used as the CNF dispersion liquid.

A CNF concentration of the CNF dispersion liquid obtained as described above is usually in a range of 0.1% to 10%.

Next, the obtained CNF dispersion liquid is desolvated to set a concentration of CNF solid contents in a range of 20% to 50%. When the concentration of CNF solid contents is less than 20%, the amount of the solvent increases, and thus the loss of thermal energy and the deterioration of yield of the additive occur during the production of the molten mixture.

On the other hand, when the concentration of solid contents is more than 50%, the CNFs are partially aggregated, and the aggregates cannot be redispersed during the production of the molten mixture, which is not preferable. The solvent may contain water, and can contain other solvents such as an organic solvent in addition to the water without particular limitation.

[(B-2) Cellulose fiber]

The cellulose fiber used in the present invention may be any fiber having a fibrous shape in which a raw material is derived from cellulose. In particular, from the viewpoint of availability, pulp for paper, cellulose nanofibers, crushed paper powder, or the like can be used without particular limitation.

In one aspect, fine paper powder obtained by finely pulverizing paper can be used. The paper as a raw material can be used without particular limitation, but as an example, waste paper or lot-out products generated in a paper factory can be used. In addition, the type of the paper is not particularly limited, and as an example, various types of paper such as virgin paper containing virgin pulp, waste paper, and discarded paper can be used. In addition, various raw materials such as coniferous tree-derived pulp, broad-leaved tree-derived pulp, and bamboo-derived pulp can be used as the raw

material pulp. Furthermore, a filler contained in the paper can be used without particular limitation as long as it does not adversely affect the rubber.

Furthermore, a method for finely pulverizing the paper is not particularly limited, and as an example, a shredder, a roller mill, a cutter mill, a pulverizer, or the like can be used alone or in combination.

For example, by pulverizing using a cutter mill (registered utility model No. 1904682), a clearance between a fixed blade and a rotary blade can be set to a minimum of 0.5 mm; and since the retention of the raw material is small and the temperature increase is small, even a thin paper having a paper pressure of 5 μm can be pulverized. A size of the paper powder is easily adjusted by a round hole screen; and as a size of the round hole screen is set to 0.5 mm in terms of the minimum diameter, the paper powder is ultrafine, as the size of the round hole screen is set to 5 mm, the paper powder is large, and as the size of the round hole screen is set to 10 mm, the paper powder is coarser. In addition, the pulverization treatment may be performed only once, or a plurality of treatments may be combined. When the pulverization treatment is performed a plurality of times, paper powder having a desired size can be obtained by adjusting the screen size and the clearance.

In one aspect, the cellulose fiber used in the present invention may have a value of D90 in a range of 10 to 50 μm, preferably 20 to 40 μm and more preferably 25 to 35 μm, the value being obtained by a measurement with a laser diffraction type particle size distribution, or may have a value of D50 in a range of 5 to 100 μm, preferably 20 to 100 μm and more preferably 25 to 50 μm, the value being obtained by a measurement with a laser diffraction type particle size distribution. When the cellulose fiber has a value of D90 of less than 10 μm, the manufacturing cost may increase, and when the value of D90 is more than 50 μm, there is a concern that the paper powder cannot be uniformly dispersed in the rubber composition. In addition, defects may occur, and bulky creping of the paper powder may be formed in the synthetic resin, and thus fluidity of the composition may be significantly reduced due to the bulky creping. The composition may be used by adjusting the fluffing of the cellulose fiber.

In addition, a water absorption amount of the cellulose fiber used in the present invention may be set to a value of 0.1% or more and 10% or less, preferably 1% or more and 8% or less and more preferably 2% or more and 6% or less, at 23°C, 50 %RH, and 48 hours.

A bulk specific gravity of the cellulose fiber used in the present invention is preferably 0.1 or more and 0.4 or less. When the bulk specific gravity is 0.4 or more, there is a concern that the dispersibility may be deteriorated. On the other hand, when the bulk specific gravity is less than 0.1, there is a concern that handling control may be difficult.

The bulk specific gravity is a value measured in accordance with JIS K 7365.

An angle of repose of the cellulose fiber used in the present invention is preferably 30° or more and 75° or less, and more preferably 30° to 70°. When the angle of repose is 75° or more, there is a concern that the fluidity is low and the uniform blending with the rubber is difficult. On the other hand, when the angle of repose is less than 30°, the fluidity is high and the handleability is lowered. The angle of repose is an average value measured three times by an inclination method (start-up angle) described in Non-Patent Document 1.

[(b-1) Aqueous dispersion of polyolefin resin]

The aqueous dispersion of a polyolefin resin in the present invention is obtained by dispersing a polyolefin in water, and can be produced by a method of dispersing a kneaded material consisting of a polyolefin and a water-soluble polymer such as polyvinyl alcohol in water, a method of melting and kneading a polyolefin and a carboxyl group-containing polyolefin, supplying the mixture to hot water containing a basic substance, and applying a shearing force to obtain a dispersion liquid, or the like.

The polyolefin used herein is a crystalline or non-crystalline olefin-based polymerized substance. In addition, the polyolefin may contain a diene having two or more double bonds.

In addition, examples of the olefin constituting the polymerized substance include α-olefins such as ethylene, propylene, butene-1, pentene-1, hexene-1, and octene-1. These may be used singly or in combination of a plurality thereof.

Examples of the diene include isoprene, butadiene, dicyclopentadiene, 1,4-pentadiene, 2-methyl-1,4-pentadiene, 1,4-hexadiene, divinylbenzene, methyldenenorbornene, and ethylidenenorbornene; and these may be used singly or in combination of a plurality thereof. Furthermore, acrylic acid esters such as styrene, vinyl acetate, acrylic acid, and methyl acrylate, and methacrylic acid esters such as methacrylic acid and methyl methacrylate can also be used.

Specific examples of the polyolefin include polyethylene, polypropylene, an ethylene/propylene copolymer, an ethylene/butene-1 copolymer, a propylene/butene-1 copolymer, an ethylene/propylene/hexadiene-1,4 copolymer, an ethylene/propylene/dicyclopentadiene copolymer, an ethylene/propylene/5-ethylidene-2-norbornene copolymer, an ethylene/propylene/5-vinyl-2-norbornene copolymer, an ethylene/butene-1/5-ethylidene-2-norbornene copolymer, an ethylene/butene-1/dicyclopentadiene copolymer, an ethylene/dicyclopentadiene copolymer, an ethylene/vinyl acetate copolymer, an ethylene/methyl methacrylate copolymer, an ethylene/acrylic acid copolymer, an ethylene/methacrylic acid copolymer, and an ethylene/butadiene copolymer.

The water-soluble polymer mixed with the above-described polyolefin is saponified polyvinyl alcohol or the like, and is not particularly limited. In addition, the carboxyl group-containing polyolefin is obtained by reacting the above-described polyolefin with maleic anhydride, maleic acid, fumaric acid, hypochlorous acid, or the like, or copolymerizing the polyolefin with acrylic acid, methacrylic acid, or the like.

In addition, when a mixture of the above-described components is dispersed in water to produce a dispersion, the mixture may contain an anionic surfactant and/or a nonionic surfactant.

A concentration of solid contents of the aqueous dispersion of the polyolefin resin produced in this manner is usually 10% to 70%, and an average particle diameter of solid content particles is 0.01 to 20 μm. The average particle diameter can be measured by a Coulter counter method or a microtrac method.

[(b-2) Polymerized substance containing, as main component, vinyl aromatic compound having molecular weight in specific range]

The polymerized substance which contains, as a main component, a vinyl aromatic compound having a molecular weight in a specific range is a styrene-based polymer containing, as a main component, a vinyl aromatic compound; and examples of the vinyl aromatic compound include styrene, α-methylstyrene, paramethylstyrene, vinyltoluene, and vinylxylene, and styrene is preferable. Examples of the styrene-based polymer include polystyrene, rubber-modified polystyrene, acrylonitrile-styrene, acrylonitrile-butadiene-styrene, methyl methacrylate-butadiene-styrene, acrylonitrile-acrylic acid-styrene, a styrene-maleic acid copolymer, an oligomer of a styrene-butadiene-styrene copolymer, a hydride thereof, and a compound having a repeating unit derived from a monomer having a styrene skeleton. Among the above, a styrene polymer or an acrylonitrile-styrene polymer is particularly preferable from the viewpoint of physical properties and cost. The styrene-based polymer may be used singly or in combination of two or more kinds thereof.

In addition, the styrene-based polymer used in the present invention is a styrene polymer having a weight-average molecular weight of 2,000 or more, preferably 2,200 or more and 4,000 or less, preferably 3,800 or less, in which a ratio of weight-average molecular weight/number-average molecular weight is 1.6 to 2.1, a ratio of Z-average molecular weight/weight-average molecular weight is 1.6 to 2.0, and a softening point is 60°C to 160°C, preferably 80°C to 130°C and more preferably 95°C to 120°C, the styrene polymer being obtained by polymerizing a styrene monomer under special conditions in an organic solvent in the presence of a Friedel-Crafts type catalyst.

When the softening point is in such a range, a heating temperature of a unit for powdering can be lowered, and further contributes to reduction of energy cost. The weight -average molecular weight refers to a value in terms of polystyrene by gel permeation chromatography (GPC).

Alternatively, the styrene-based polymer is obtained by polymerizing or copolymerizing a monomer having a styrene skeleton in the presence of a Friedel-Crafts catalyst, and a weight-average molecular weight thereof is 200 or more, preferably 750 or more and more preferably 1,000 or more, and is 5,000 or less, preferably 4,000 or less and more preferably 3,800 or less.

In addition, as the Friedel-Crafts type catalyst, a generally used catalyst can be used.

The styrene-based polymer can also be obtained as a commercially available product; and examples of the commercially available product include products manufactured by TOAGOSEI CO., LTD., such as a product name "ARUFON (registered trademark) UP-1150", products manufactured by YASUHARA CHEMICAL CO., LTD., such as a product name "YS RESIN SX-100" (weight-average molecular weight: 2,500), products manufactured by Eastman Chemical Company, such as PICOLASTIC A5 (polystyrene, softening point: 5°C, weight-average molecular weight: 350), PICOLASTIC A-75 (polystyrene, softening point: 74°C, weight-average molecular weight: 1,300), PICOTEX 75 (copolymer of vinyl toluene and α-methylstyrene; softening point: 75°C, weight-average molecular weight: 1,100), PICOTEX LC (copolymer of vinyl toluene and α-methylstyrene; softening point: 91°C, weight-average molecular weight: 1,350), CRYSTALLEX 3070 (poly α-methylstyrene; softening point: 70°C, weight-average molecular weight: 950), CRYSTALLEX 3085 (poly α-methylstyrene; softening point: 85°C, weight-average molecular weight: 1,150), CRYSTALLEX 3100 (poly α-methylstyrene; softening point: 100°C, weight-average molecular weight: 1,500), and CRYSTALLEX 5140 (poly α-methylstyrene; softening point: 139°C, weight-average molecular weight: 4,900), and products such as HIMER ST-95 (polystyrene; softening point: 95°C, weight-average molecular weight: 4,000; manufactured by SANYO Chemical Industries, Ltd.).

[(c-1) Silane coupling agent]

The molten mixture according to the present invention may further contain (c-1) a silane coupling agent.

The silane coupling agent is an organosilicon compound having both a hydrolyzable group and an organic functional group in one molecule.

The hydrolyzable group refers to a substituent which is directly linked to a silicon atom and can form a siloxane

bond by a hydrolysis reaction and/or a condensation reaction. The hydrolyzable group generally represents a hydrogen atom or an alkyl group having 1 or more and 22 or less carbon atoms. The alkyl group may be linear, branched, or cyclic. When a plurality of hydrolyzable groups are present in the molecule of the silane coupling agent, the above-described hydrolyzable groups may be the same or different from each other.

In general, the organic functional group is preferably at least one selected from a vinyl group, an epoxy group, a styryl group, a methacryl group, an acrylic group, an amino group, a ureido group, a mercapto group, a sulfide group, an isocyanate group, an isocyanurate group, or the like. When a plurality of organic functional groups are present in the molecule of the silane coupling agent, the above-described organic functional groups may be the same or different from each other.

Examples of the silane coupling agent include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, hydrochloride of N-(vinylbenzyl)-2-aminoethyl-3-aminopropyltrimethoxysilane, 3-ureidopropyltrialkoxysilane, 3-isocyanatepropyltriethoxysilane, tris(-trimethoxysilylpropyl)isocyanurate, 3-mercaptopropylmethyldimethoxysilane, and 3-mercaptopropyltrimethoxysilane.

[(c-2) (Modified polyolefin)]

The molten mixture according to the present invention may further contain (c-2) a modified polyolefin. In the molten mixture according to the present invention, (c-1: silane coupling agent) and (c-2: modified polyolefin) may be blended together.

The modified polyolefin is not particularly limited as long as it is obtained by modifying a polyolefin to impart polarity; and examples thereof include polypropylene modified with (anhydride)carboxylic acid, epoxide, oxazoline, isocyanate, carbodiimide, or the like, and preferred examples thereof include maleic acid anhydride-modified polypropylene, carbodiimide-modified polypropylene, and epoxy-modified polypropylene. A weight-average molecular weight of the modified polyolefin is 500,000 or less, preferably 300,000 or less and more preferably 200,000 or less.

(Proportion of (a) natural nano-polymer and (b-1) aqueous dispersion of polyolefin resin in (B-1) molten mixture)

In the molten mixture (B-1) according to the present invention, with respect to 1 part by mass of the natural nano-polymer (a), a content of the aqueous dispersion (b-1) of a polyolefin resin in terms of solid is 0.05 to 1 part by mass, preferably 0.1 parts by mass to 0.5 parts by mass and more preferably 0.2 parts by mass to 0.3 parts by mass. When the content of the aqueous dispersion of a polyolefin resin is less than 0.05 parts by mass, the effect on the dispersibility of the cellulose nanofibers is not obtained; and when the content is more than 1 part by mass, the aqueous dispersion acts as a lubricant, and thus shearing is not applied and moisture in the molten mixture does not escape.

(Proportion of (a) natural nano-polymer and (b-2) styrene-based polymer containing vinyl aromatic compound as main component in (B-1) molten mixture)

In the molten mixture (B-1) according to the present invention, with respect to 1 part by mass of the natural nano-polymer (a), a content of the styrene-based polymer (b-2) containing a vinyl aromatic compound as a main component in terms of solid is 0.05 to 5 parts by mass, preferably 0.1 parts by mass to 1 part by mass and more preferably 0.2 parts by mass to 0.6 parts by mass. When the content of the styrene-based polymer is less than 0.05 parts by mass, the effect on the dispersibility of the cellulose nanofibers is not obtained; and in a case where the content of the is more than 5 parts by mass, the physical properties of strength are significantly reduced and problems on the surface of the molded product due to bleeding or the like occur.

When the molten mixture contains (c-1: silane coupling agent), the silane coupling agent (c-1) may be blended in an amount of 0.1 parts by mass or more and 10 parts by mass or less with respect to 100 parts by mass of the mixture of the above-described natural nano-polymer (a) and the above-described aqueous dispersion (b-1) of a polyolefin resin or the above-described styrene-based polymer (b-2) containing a vinyl aromatic compound as a main component.

In addition, when the molten mixture contains (c-2: modified polyolefin), the modified polyolefin (c-2) may be blended in an amount of 0.05 parts by mass or more and 5 parts by mass or less with respect to 100 parts by mass of the mixture of the above-described natural nano-polymer (a) and the above-described aqueous dispersion (b-1) of a polyolefin resin or the above-described styrene-based polymer (b-2) containing a vinyl aromatic compound as a main component.

Furthermore, when the molten mixture contains (c-1: silane coupling agent) and (c-2: modified polyolefin), the

silane coupling agent (c-1) may be blended in an amount of 0.1 parts by mass or more and 10 parts by mass or less and the modified polyolefin (c-2) may be blended in an amount of 0.05 parts by mass or more and 5 parts by mass or less, with respect to 100 parts by mass of the mixture of the above-described natural nano-polymer (a) and the above-described aqueous dispersion (b-1) of a polyolefin resin or the above-described styrene-based polymer (b-2) containing a vinyl aromatic compound as a main component.

(Method for producing molten mixture)

As a method for producing the molten mixture, first, a mixing step of mixing a mixture containing the natural nano-polymer (a) and a solvent with the aqueous dispersion (b-1) of a polyolefin resin or the styrene-based polymer (b-2) containing a vinyl aromatic compound as a main component to obtain a mixture. Here, the reason why the aqueous dispersion (b-1) of a polyolefin resin is used is that both the components (a) and (b) are in a form in which water-insoluble components are dispersed in water, and the presence of the olefin in the molten mixture makes it possible to improve the dispersibility of the natural nano-polymer and the rubber.

In addition, as a device used for the mixing, a high-speed mixer represented by a tumble mixer, a Henchel mixer, a ribbon blender, a super mixer, or the like can be used.

Next, a step of heating the obtained mixture while applying a shearing force to remove moisture from the mixture and powder the mixture is performed.

A moisture content of the obtained molten mixture may be 10.0% or less, preferably 8.0% or less and more preferably 6.0% or less. This is because the dispersibility of the natural nano-polymer in the rubber composition is deteriorated when the moisture value of the molten mixture is a value higher than 10.0%.

In addition, a unit for powdering is not particularly limited as long as the powdering can be carried out while heating and applying a shearing force. Specific examples thereof include a single-screw extruder, a twin-screw extruder, a twin-screw kneading machine, a kneader, a Banbury mixer, a reciprocating kneader, and a roll kneader. Here, when a continuous extruder such as a twin-screw kneader is used, since the work can be continuously performed up to a kneading step for the resin or the like, the efficiency is favorable, which is particularly preferable. In addition, in order to remove moisture and other volatile components generated in a powdering step, a degassing facility or the like may be used. In addition, nitrogen purging may be performed in order to suppress deterioration due to oxidation, abnormal decomposition, and the like. Heating conditions for the mixture of the natural nano-polymer, such as heating time, are not particularly limited.

A particle diameter of the obtained molten mixture, which is a value of an average particle diameter D50 (median diameter) obtained by measuring a particle size distribution, is preferably 11,000 μm or less, more preferably 7,500 μm or less, and still more preferably 5,500 μm or less.

Similarly, the value of D90 may be 12,000 μm or less, preferably 11,100 μm or less, and more preferably 8,300 μm or less. This is because the dispersibility of the natural nano-polymer in the rubber composition is deteriorated when the value of the average particle diameter D50 is a value of higher than 11,000 μm or the value of D90 is a value of higher than 12,000 μm.

([(C]) Silane coupling agent])

In the present invention, a silane coupling agent having a mercapto group is used. The mercapto group is a functional group represented by (-SH), and examples thereof include a thiol group, a sulfanyl group, and a sulfhydryl group. The silane coupling agent having a mercapto group is not particularly limited, and examples thereof include 3-mercaptopropyltrimethoxysilane, 3-mercaptopropyltriethoxysilane, 2-mercaptoethyltrimethoxysilane, and 2-mercaptoethyltriethoxysilane.

In addition, in the rubber composition according to the embodiment of the present invention, a silane coupling agent having another functional group can be used in combination. The silane coupling agent used in combination is not particularly limited, and examples thereof include a silane coupling agent having a vinyl group, an epoxy group, a styryl group, an acrylic group, an amino group, a ureido group, a mercapto group, a sulfide group, an isocyanate group, an isocyanurate group, or the like. Among the above, a silane coupling agent having an amino group is preferably used.

An amount of the silane coupling agent to be blended is preferably in a range of 5% to 50% by mass and more preferably in a range of 10% to 20% by mass with respect to the molten mixture.

(Additive and the like of rubber composition)

In the rubber composition according to the embodiment of the present invention, as desired, a reinforcing filler such as carbon black and silica, which is generally used in the rubber industry, and various additives such as a vulcanizing agent, a vulcanization accelerator, an anti-aging agent, a scorch inhibitor, zinc oxide, stearic acid, process oil, vegetable

oil, and a plasticizer, which are blended for tires and other general rubbers, can be blended in a general amount in the related art, as long as the object of the present invention is not impaired. These various additives can be blended singly or in any combination.

As the vulcanizing agent, an organic peroxide or a sulfur-based vulcanizing agent can be used. Examples of the organic peroxide include dicumyl peroxide, t-butyl peroxybenzene, and di-t-butyl peroxy-diisopropylbenzene; and examples of the sulfur-based vulcanizing agent include sulfur and morpholine disulfide.

Examples of the vulcanization accelerator which can be used include thiazole-based vulcanization accelerators such as 2-mercaptobenzothiazole (MTB) and di-2-dibenzothiazyl disulfide (MBTS); sulfenamide-based vulcanization accelerators such as N-cyclohexyl-2-benzothiazylsulfenamide (CBS), N-tert-butyl-2-benzothiazylsulfenamide (TBBS), and N-oxydiethylene-2-benzothiazole sulfenamide; and guanidine-based vulcanization accelerators such as diphenylguanidine (DPG).

(Method for producing rubber composition)

A method for producing the rubber composition according to the embodiment of the present invention is not particularly limited, and the rubber composition can be produced by a production method having the following steps A to D. The order of a mixing step (step A) and a first kneading step (step B) may be changed.

Step A: a mixing step of mixing a molten mixture with a silane coupling agent having a mercapto group, or mixing a molten mixture with a silane coupling agent having a mercapto group and a silane coupling agent having an amino group to obtain a mixture of the molten mixture and the silane coupling agent
Step B: a first kneading step of kneading a rubber in a masticated state
Step C: a second kneading step of putting the mixture obtained in the step A after the first kneading step into a kneader for kneading
Step D: a third kneading step of taking out the rubber composition obtained in the second kneading step, and putting the rubber composition into a kneader together with an additive to process the rubber composition into a sheet shape

(Mixing step)

The mixing step is a step of mixing the molten mixture with a silane coupling agent having a mercapto group or a silane coupling agent having a mercapto group and a silane coupling agent having an amino group. As a mixing method, known methods can be used without particular limitation. By using the silane coupling agent having an amino group in combination, the reaction can be shifted to the base side, and thus the hydrolysis reaction can be accelerated.

(First kneading step)

The first kneading step is a step of kneading the rubber (raw rubber) in a masticated state. Examples of the kneader used in the present step include open-type or closed-type kneaders such as a plastomill, an open mill, a kneader, a Banbury mixer, a roll, and an intermixer.

For example, the rubber polymer is charged into an internal mixer at a filling rate of 80%, and kneaded for 5 minutes to obtain a masticated rubber polymer. In this case, the set temperature can be set to 80°C and the rotation speed can be set to 30 rpm.

(Second kneading step)

The second kneading step is a step of putting the mixture obtained in the above-described mixing step after the first kneading step into a kneader for kneading.

The present step is a step required when carbon black, an anti-aging agent, stearic acid, wax, zinc oxide, oil, or the like is further blended into the rubber composition.

For example, the mixture obtained in the above-described mixing step, which contains the masticated rubber polymer obtained in the above-described first kneading step and cellulose fibers, and other formulation agents are charged into an internal mixer so that the filling rate is 80%, and the mixture is kneaded for 3 minutes at a rotor rotation speed of 30 rpm. Thereafter, the rotation speed is adjusted so that the rubber temperature is 150°C, the mixture is held at 150°C for 5 minutes, and then the mixture is discharged. The set temperature in this case can be set to 80°C.

(Third kneading step)

The third kneading step is a step of taking out the rubber composition obtained in the second kneading step, and

putting the rubber composition into a kneader together with an additive to process the rubber composition into a sheet shape. The present step is a step required when oil, sulfur, a vulcanization accelerator, or the like is further blended into the rubber composition obtained in the second kneading step.

For example, the rubber kneaded in the above-described first and second kneading steps is put into an open roll, and an additive such as a sulfur, an accelerator, and a vulcanization accelerator is added thereto. Thereafter, the rubber is sheeted, rolled, and sheeted and rolled again, and the steps are repeated four times to promote the dispersion of the vulcanization system. Thereafter, the sheet is processed into a sheet shape by adjusting the thickness to an appropriate thickness.

In addition, the rubber composition according to the embodiment of the present invention can be kneaded by a known method to obtain a composition, which can be used after being vulcanized or crosslinked. For example, the rubber composition according to the embodiment of the present invention can be kneaded using a kneader such as an open kneader such as a roll or a closed kneader such as a Banbury mixer. After the kneading, vulcanization is performed by molding processing, and the rubber composition can be applied to various rubber product applications.

## Examples

The present invention will be described in more detail based on Examples, but the present invention is not limited to Examples. In addition, an average degree of polymerization described in Examples and Comparative Examples was measured by the following measuring method.

(Measurement of degree of polymerization of CNF)

0.15 g of a CNF solid content was dissolved in 30 mL of a 0.5 M copper ethylenediamine solution, a viscosity $\eta$ of the CNF/copper ethylenediamine solution was measured using a Cannon-Fenske kinematic viscometer. A viscosity of the 0.5 M copper ethylenediamine solution was defined as $\eta 0$, an intrinsic viscosity $[\eta]$ was determined from the following Schulz-Blaschke equation, and a degree of polymerization DP was calculated from the following Mark-Houwink-Sakurada equation.

$$\text{Specific viscosity } \eta sp = \eta/\eta 0 - 1$$

$$\text{Intrinsic viscosity } [\eta] = \eta sp/\{c(1 + A \times \eta sp)\}$$

$\eta 0$ is the viscosity of the 0.5 M copper ethylenediamine solution, c is the CNF concentration (g/mL), and A is an eigenvalue determined by the type of solution, and in the 0.5 M copper ethylenediamine solution, A = 0.28.

$$\text{Degree of polymerization DP} = [\eta]/Ka$$

K and a are eigenvalues determined by the type of polymer and solvent, and in a cellulose dissolved in a copper ethylenediamine solution, K = 0.57 and a = 1.

(Production Example 1: Molten mixture A1)

Using a mechanical hybrid (manufactured by NIPPON COKE & ENGINEERING. CO., LTD., model: MMH-75B/I), a CNF-water mixture (CNF solid content: 50%, moisture content: 50%, average degree of polymerization: 810) derived from coniferous pulp and an aqueous dispersion of a polyolefin resin (manufactured by Mitsui Chemicals, Inc.; CHEMIPEARL 401) were mixed with each other at a proportion of 9:1 (1:0.1) to obtain a mixture.

Next, the obtained mixture was subjected to a twin-screw extruder (Japan Steel Works, LTD., model: TEX25$\alpha$III) to obtain a molten mixture. A screw diameter was $\Phi$25 mm, and an average cylinder temperature was 129°C.

(Production Example 2: Molten mixture A2)

Using a mechanical hybrid (manufactured by NIPPON COKE & ENGINEERING. CO., LTD., model: MMH-75B/I), a CNF-water mixture (CNF solid content: 30%, moisture content: 70%, average degree of polymerization: 810) derived from coniferous pulp and an aqueous dispersion of a polyolefin resin (manufactured by Mitsui Chemicals, Inc.; CHEMIPEARL 401) were mixed with each other at a proportion of 9:1 (1:0.1), and then 3-glycidoxypropyltriethoxysilane (manufactured by Shin-Etsu Chemical Co., Ltd.; KBE-403) as a silane coupling agent was mixed in an amount of 3.3 parts

by mass with respect to 100 parts by mass of the mixture to obtain a mixture.

The obtained mixture was subjected to a twin-screw extruder (Japan Steel Works, LTD., model: TEX25αIII) to obtain a molten mixture. A screw diameter was Φ25 mm, and an average cylinder temperature was 118°C.

(Production Example 3: Molten mixture A3)

Using a mechanical hybrid (manufactured by NIPPON COKE & ENGINEERING. CO., LTD., model: MMH-75B/I), a CNF-water mixture (CNF solid content: 30%, moisture content: 70%, average degree of polymerization: 810) derived from coniferous pulp and an aqueous dispersion of a polyolefin resin (manufactured by Mitsui Chemicals, Inc.; CHEMIPEARL 401) were mixed with each other at a proportion of 9:1 (1:0.1) to obtain a mixture.

Next, the obtained mixture was subjected to a twin-screw extruder (Japan Steel Works, LTD., model: TEX25αIII) to obtain a molten mixture. A screw diameter was Φ25 mm, and an average cylinder temperature was 106°C.

(Production Example 4: Molten mixture B1)

Using a mechanical hybrid (manufactured by NIPPON COKE & ENGINEERING. CO., LTD., model: MMH-75B/I), a CNF-water mixture (CNF solid content: 35%, moisture content: 65%, average degree of polymerization: 810) derived from coniferous pulp and a styrene-based polymer (manufactured by YASUHARA CHEMICAL CO., LTD., YS RESIN SX100) were mixed with each other at a proportion of 7:3 (1:0.4).

Next, the obtained mixture of the CNF and the styrene-based oligomer were subjected to a twin-screw extruder (Japan Steel Works, LTD., model: TEX25αIII) to obtain powdery cellulose nanofibers. The screw diameter had a diameter of 25 mm, and a resin temperature was set to 114°C.

(Production Example 5: Molten mixture B2)

Using a mechanical hybrid (manufactured by NIPPON COKE & ENGINEERING. CO., LTD., model: MMH-75B/I), a CNF-water mixture (CNF solid content: 35%, moisture content: 65%, average degree of polymerization: 810) derived from coniferous pulp and a styrene-based polymer (manufactured by YASUHARA CHEMICAL CO., LTD., YS RESIN SX100) were mixed with each other at a proportion of 7:3 (1:0.4).

Next, the obtained mixture of the CNF and the styrene-based oligomer were subjected to a twin-screw extruder (Japan Steel Works, LTD., model: TEX25αIII) to obtain powdery cellulose nanofibers. The screw diameter had a diameter of 25 mm, and a resin temperature was set to 103°C.

(Measurement of moisture value and particle size distribution)

A moisture value of the molten mixtures obtained in Production Examples 1 to 5 was measured using an infrared/halogen moisture meter (manufactured by Mettler-Toledo International Inc., model: HC103).

In addition, a particle size distribution of the molten mixtures obtained in Production Examples 1 to 5 was measured by the following measurement method.

The results are shown in Table 1.

(Measurement of particle size distribution)

The particle size distribution of the molten mixture was measured using an image diffraction-type particle size distribution measuring device (manufactured by MicrotracBEL Corp.; Microtrac PartAn 3D) with approximately 5 g of the molten mixture. As the measurement results, values of D50 and D90 were adopted.

[Table 1]

| | Moisture value (%) | Particle diameter (μm) | |
|---|---|---|---|
| | | D50 | D90 |
| Production Example 1 (molten mixture A1) | 5.6 | 5,300 | 8,200 |
| Production Example 2 (molten mixture A2) | 7.2 | 7,200 | 11,000 |
| Production Example 3 (molten mixture A3) | 10.3 | 14,000 | 16,000 |
| Production Example 4 (molten mixture B1) | 3.5 | 3,800 | 6,300 |

(continued)

| | Moisture value (%) | Particle diameter (μm) | |
|---|---|---|---|
| | | D50 | D90 |
| Production Example 5 (molten mixture B2) | 11.2 | 10,500 | 12,500 |

The respective components used in Examples and Comparative Examples are shown below.

· Natural rubber: "SMR CV60 (product name)" manufactured by Astlett Rubber Inc.
· Synthetic rubber: "EP21 (product name)" manufactured by JSR Corporation
· Carbon black: "Asahi #60G (product name)" manufactured by Asahi Carbon Co., Ltd.
· Paper powder 1 (Example 22)
angle of repose: 65°, bulk specific gravity: 0.22, moisture content: 3.3%, D50 (median diameter): 33.6 μm
· Paper powder 2 (Example 23)
angle of repose: 44°, bulk specific gravity: 0.23, moisture content: 3.7%, D50 (median diameter): 35.8 μm
· Silane coupling agent (C1): "Si-69 (product name)" (bis(3-triethoxysilylpropyl)tetrasulfide) manufactured by Evonik Industries AG
· Silane coupling agent (C2): "NXT-Z45 (product name)" manufactured by Momentive Performance Materials, Inc. (structural formula is shown in Formula 2)
· Silane coupling agent (C3): "A1891 (product name)" (3-mercaptopropyltriethoxysilane) manufactured by Momentive Performance Materials, Inc.
· Silane coupling agent (C4): "NXT-silane (product name)" (3-octanoylthiopropyltriethoxysilane) manufactured by Momentive Performance Materials, Inc.
· Silane coupling agent (C5): "A1110" (3-aminopropyltrimethoxysilane) manufactured by Momentive Performance Materials, Inc.
· Stearic acid: "Tsubaki (product name)" manufactured by NOF Corporation
· Zinc oxide: "Zinc Oxide III (product name)" manufactured by SEIDO CHEMICAL INDUSTRY CO., LTD.
· Purified mineral oil: "SNH-22 (product name)" manufactured by SANKYO YUKA KOGYO K.K.
· Sulfur: "HK-200-5 (5% oil sulfur) (product name)" manufactured by HOSOI CHEMICAL INDUSTRY CO.,LTD.
· Vulcanization accelerator 1: "SUNCELLER CM-G (N-cyclohexyl-2-benzothiazolesulfenamide) (product name)" manufactured by SANSHIN CHEMICAL INDUSTRY CO.,LTD.
· Vulcanization accelerator 2: "Nocceler NS-P (N-tert-butyl-2-benzothiazolylsulfenamide) (product name)" manufactured by OUCHI SHINKO CHEMICAL INDUSTRIAL CO., LTD.

[chem. 2]

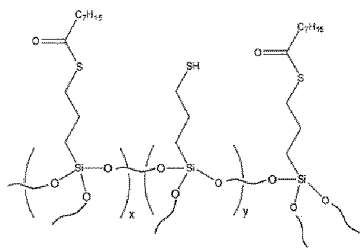

(Example 1)

(Production of rubber composition)

After weighing each component shown below, a molten mixture (A1) and a silane coupling agent (C2) were mixed in advance to obtain a mixture. Next, the natural rubber was kneaded in a masticated state for 30 seconds using a Banbury mixer (manufactured by Toyo Seiki Seisaku-sho, Ltd., Labo Plastomill), and then the above-described mixture was put into the Banbury mixer and kneaded for 30 seconds. Next, after carbon black was put therein, the mixture was kneaded under a condition of 110°C, and the dispersibility was visually evaluated. Next, the other components were put into the mixture, and the mixture was kneaded under a condition of 110°C to obtain a rubber composition.

· Natural rubber: 100 parts by mass
· Carbon black: 50 parts by mass
· Molten mixture (A1): 7.8 parts by mass
· Silane coupling agent (C2): 2.65 parts by mass
· Stearic acid: 2 parts by mass
· Zinc oxide: 5 parts by mass
· Refined mineral oil: 15 parts by mass
· Sulfur: 2.48 parts by mass
· Vulcanization accelerator 2: 1 part by mass

(Evaluation of dispersibility)

A dispersion state of the cellulose fibers in the rubber composition after the carbon black was put in was visually confirmed using the following evaluation standards.

◦: no aggregates were observed and the particles were uniformly dispersed.
×: aggregates were observed.

Next, a Mooney viscosity of the obtained rubber composition was measured by the following method. Next, Mooney viscosity and vulcanization characteristics as physical property evaluation were measured by the following methods using the obtained rubber composition. Next, the obtained rubber sheet was subjected to press crosslinking molding to obtain a test piece. After confirming dispersibility of the cellulose fibers in the test piece, the vulcanized rubber was evaluated using the obtained rubber crosslinked sheet according to the following method.

[Evaluation of physical properties]

(Mooney viscosity (ML1 + 10 (100°C)))

The Mooney viscosity (ML(1 + 4) 125°C) at 100°C was measured under a condition of 100°C using a Mooney viscometer (M&K Co., Ltd., device name: MVM11) in accordance with JIS K 6300.

(Vulcanization characteristics)

Vulcanization characteristics were measured using a curelastometer (registered trademark) (M&K Co., Ltd., device name: Curebase) in accordance with JIS K 6300-2.

A vulcanization curve was measured at a measurement temperature of 160°C for 20 minutes, and a minimum value ML (kgf·cm) of torque, a maximum value MH (kgf·cm) of torque, a time T10 (minutes) taken for the torque to reach 10% of MH, a time T50 (minutes) taken for the torque to reach 50% of MH, and a time T90 (minutes) taken for the torque to reach 90% of MH were obtained from a graph with a vertical axis representing the torque and a horizontal axis representing the time.

As a result, T10 was 0.7 minutes, T90 was 1.2 minutes, ML was 3.9 kgf·cm, and MH was 46.7 kgf·cm.

(Evaluation of physical properties of vulcanized rubber)

(Tensile breaking point stress and tensile breaking point elongation)

A tensile breaking point stress and a tensile breaking point elongation of the rubber crosslinked sheet were measured by the following method.

The rubber crosslinked sheet was punched out to prepare a test piece in accordance with JIS K 6251, and the test piece was used for performing a tensile test under conditions of a measurement temperature of 23°C, a relative humidity of 50%, and a tensile rate of 500 mm/min according to the method specified in JIS K 6251; and a tensile stress at an elongation rate of 25% (25% modulus (M25)), a tensile stress at an elongation rate of 50% (50% modulus (M50)), a tensile stress at an elongation rate of 100% (100% modulus (M100)), a tensile stress at an elongation rate of 200% (200% modulus (M200)), a tensile stress at an elongation rate of 300% (300% modulus (M300)), a tensile breaking point stress (TB), and a tensile breaking point elongation (EB) were measured.

(Examples 2 to 18 and Comparative Examples 1 to 3)

A rubber composition was obtained in the same manner as in Example 1, except that the type and amount of the components were changed as shown in Table 2 in the section of "Production of rubber composition" described above. The same evaluations as in Example 1 were performed using the obtained rubber composition. The results are shown in Tables 2 and 3.

In addition, in Comparative Examples 2 and 3, the evaluation was "×" in the evaluation of dispersibility, and thus the subsequent treatment was not performed.

[Table 2]

| | Example 1 | Example 2 | Example 3 | Example 4 | Example 5 | Example 6 | Comparative Example 1 | Comparative Example 2 |
|---|---|---|---|---|---|---|---|---|
| Formulation of rubber composition | | | | | | | | |
| Natural rubber (SMR CV60) | 100 | 100 | 100 | 100 | 100 | 100 | 100 | 100 |
| Carbon black (Asahi #60G) | 50 | 50 | 50 | 50 | 40 | 50 | 50 | 50 |
| Molten mixture (A1) | 7.8 | 7.8 | - | 7.8 | 10 | 7.8 | - | - |
| Molten mixture (A2) | - | - | 7.8 | - | - | - | - | - |
| Molten mixture (A3) | - | - | - | - | - | - | - | 7.8 |
| Molten mixture (B1) | - | - | - | - | - | - | - | - |
| Molten mixture (B2) | - | - | - | - | - | - | - | - |
| Silane coupling agent (Si69) | - | - | 3 | 3 | - | - | - | - |
| Silane coupling agent (NXT-Z45) | 2.65 | - | - | - | 1 | - | - | - |
| Silane coupling agent (A1891) | - | - | - | - | - | 1.33 | - | - |
| Silane coupling agent (NXT-silane) | - | 2.03 | - | - | - | - | - | - |
| Silane coupling agent (A1110) | - | - | - | 1.5 | 0.5 | 0.75 | - | - |
| Evaluation of dispersibility | ○ | ○ | ○ | ○ | ○ | ○ | - | × |
| Stearic acid | 2 | 2 | 2 | 2 | 2 | 2 | 2 | - |
| Zinc oxide | 5 | 5 | 5 | 5 | 5 | 5 | 5 | - |
| Refined mineral oil | 15 | 15 | 15 | 15 | 15 | 15 | 15 | - |
| Sulfur | 2.48 | 2.48 | 2.11 | 2.11 | 2.48 | 2.48 | 2.6 | - |
| Vulcanization accelerator 1 (CM-G) | - | - | - | - | - | - | 1.27 | - |
| Vulcanization accelerator 2 (NS-P) | 1 | 1 | 1 | 1 | 1 | 1 | 1.32 | - |
| Evaluation result | | | | | | | | |
| Mooney viscosity (ML1 + 10) | 32.9 | 28.5 | 27.2 | 49.7 | 35.8 | 46 | 31.3 | - |

(continued)

| Evaluation result | | | | | | | | | |
|---|---|---|---|---|---|---|---|---|---|
| Vulcanization characteristics | t10 (min) | 1.78 | 3.38 | 3.36 | 1.1 | 1.7 | 1.11 | 2.3 | - |
| | t50 (min) | 2.68 | 4.43 | 4.5 | 1.65 | 2.51 | 1.75 | 3.3 | - |
| | t90 (min) | 4.56 | 6.35 | 6.78 | 2.9 | 4.21 | 3.1 | 4.56 | - |
| | ML (kgf·cm) | 0.24 | 0.21 | 0.19 | 0.35 | 0.27 | 0.33 | 0.24 | - |
| | MH (kgf·cm) | 2.84 | 2.53 | 2.36 | 1.89 | 2.76 | 2.7 | 2.34 | - |
| Evaluation of physical properties of vulcanized rubber | M25 (MPa) | 1.93 | 1.47 | 1.46 | 0.83 | 1.47 | 1.83 | 0.60 | - |
| | M50 (MPa) | 3.60 | 2.80 | 3.05 | 1.70 | 3.10 | 3.53 | 1.10 | - |
| | M100 (MPa) | 5.30 | 400 | 4.43 | 3.80 | 5.00 | 5.47 | 2.20 | - |
| | M200 (MPa) | 8.83 | 7.13 | 7.43 | 8.07 | 8.40 | 9.53 | 5.80 | - |
| | M300 (MPa) | 13.1 | 11.1 | 11.2 | 12.7 | 12.7 | 14.3 | 10.3 | - |
| | Tensile stress (MPa) | 17.0 | 16.9 | 16.1 | 17.4 | 17.6 | 16.5 | 22.0 | - |
| | Elongation rate (%) | 397 | 443 | 436 | 413 | 413 | 353 | 550 | - |

[Table 3]

| | Example 7 | Example 8 | Example 9 | Example 10 | Example 11 | Example 12 | Example 13 | Example 14 | Example 15 | Example 16 | Example 17 | Example 18 | Comparative Example 1 | Comparative Example 3 |
|---|---|---|---|---|---|---|---|---|---|---|---|---|---|---|
| Formulation of rubber composition | | | | | | | | | | | | | | |
| Natural rubber (SMR CV60) | 100 | 100 | 100 | 100 | 100 | 100 | 100 | 100 | 100 | 100 | 100 | 100 | 100 | 100 |
| Carbon black (Asahi #60G) | 50 | 50 | 50 | 50 | 50 | 50 | 50 | 40 | 30 | 50 | 30 | 40 | 50 | 50 |
| Molten mixture (A1) | - | - | - | - | - | - | - | - | - | - | - | - | - | - |
| Molten mixture (A2) | - - | - - | - - | - - | - - | - - | - - | - - | - - | - - | - - | - - | - - | - - |
| Molten mixture (A3) | - | - | - | - | - | - | - | - | - | - | - | - | - | - |
| Molten mixture (B1) | 3 | 10 | 30 | 10 | 10 | 10 | 10 | 10 | 10 | 30 | 30 | 10 | - | - |
| Molten mixture (B2) | - | - | - | - | - | - | - | - | - | - | - | - | - | 10 |
| Silane coupling agent (Si69) agent | 0.3 | 1 | 3 | - | - | - | - | - | - | - | - | - | - | - |
| Silane coupling (NXT-Z45) | - | - | - | - | - | 2.45 | 1 | 1 | 1 | 3 | 3 | 3 | - | - |
| Silane coupling agent (A1891) | - | - | - | 2.65 | - | - | - | - | - | - | - | - | - | - |
| Silane coupling agent (NXT-silane) | - | - | - | - | 4.06 | - | - | - | - | - | - | - | - | - |
| Silane coupling agent (A1110) | - | - | - | - | 0.75 | 1.5 | 0.5 | 0.5 | 0.5 | 1.5 | 1.5 | 1.5 | - | - |
| Evaluation of dispersibility | ○ | ○ | ○ | | ○ | ○ | ○ | ○ | ○ | ○ | ○ | ○ | - - | × |
| Stearic acid | 2 | 2 | 2 | 2 | 2 | 2 | 2 | 2 | 2 | 2 | 2 | 2 | 2 | - |
| Zinc oxide | 5 | 5 | 5 | 5 | 5 | 5 | 5 | 5 | 5 | 5 | 5 | 5 | 5 | - - |
| Refined mineral oil | 15 | 15 | 15 | 15 | 15 | 15 | 15 | 15 | 15 | 15 | 15 | 15 | 15 | - |
| Sulfur | 2.11 | 2.11 | 2.11 | 2.48 | 2.48 | 2.48 | 2.48 | 2.36 | 2.36 | 2.36 | 2.36 | 2.36 | 2.6 | - |
| Vulcanization accelerator 1 (CM-G) | - | - | - | - | - | - | - | - | - | - | - | - | 1.27 | - |
| Vulcanization accelerator 2 (NS-P) | 1 | 1 | 1 | 1 | 1 | 1 | 1 | 1 | 1 | 1 | 1 | 1 | 1.32 | - |
| Evaluation result | | | | | | | | | | | | | | |
| Mooney viscosity ML1 + 10) | 30.4 | 32.3 | 34 | 27.9 | 35.5 | 58.3 | 37.5 | 33.2 | 30 | 48.8 | 40.7 | 42.9 | 31.3 | - |

(continued)

| Evaluation result | | | | | | | | | | | | | | | |
|---|---|---|---|---|---|---|---|---|---|---|---|---|---|---|---|
| Vulcanization characteristics | t10 (min) | 2.65 | 2.5 | 2.7 | 0.83 | 1.61 | 0.75 | 1.8 | 1.81 | 1.7 | 0.81 | 0.88 | 0.83 | 2.3 | - |
| | t50 (min) | 3.41 | 3.18 | 3.21 | 1.43 | 2.3 | 1.38 | 2.58 | 2.7 | 2.61 | 1.5 | 1.61 | 1.6 | 3.3 | - |
| | t90 (min) | 4.45 | 4.21 | 4.23 | 3.36 | 3.76 | 2.33 | 4.31 | 4.61 | 4.33 | 2.98 | 3.06 | 3.03 | 4.56 | - |
| | ML (kgf·cm) | 0.23 | 0.24 | 0.26 | 0.22 | 0.28 | 0.38 | 0.27 | 0.25 | 0.23 | 0.39 | 0.33 | 0.34 | 0.24 | - |
| | MH (kgf·cm) | 2.41 | 2.4 | 2.21 | 2.11 | 2.43 | 2.5 | 2.75 | 2.48 | 2.25 | 2.71 | 2.16 | 2.38 | 2.34 | - |
| Evaluation of physical properties of vulcanized rubber | M25 (MPa) | 0.80 | 1.10 | 2.50 | 0.93 | 0.90 | 1.63 | 1.20 | 0.93 | 0.70 | 2.70 | 1.67 | 0.97 | 0.60 | - |
| | M50 (MPa) | 1.40 | 1.90 | 4.70 | 1.70 | 1.80 | 3.43 | 2.33 | 1.97 | 1.40 | 5.53 | 3.80 | 1.93 | 1.10 | - |
| | M100 (MPa) | 2.60 | 3.20 | 6.30 | 3.00 | 3.33 | 5.87 | 4.30 | 3.50 | 2.70 | 7.93 | 6.17 | 3.73 | 2.20 | - |
| | M200 (MPa) | 6.30 | 6.60 | 9.20 | 6.13 | 7.17 | 10.10 | 8.77 | 7.00 | 5.33 | 11.37 | 8.80 | 7.33 | 5.80 | - |
| | M300 (MPa) | 11.0 | 11.0 | 12.5 | 10.0 | 11.7 | 14.9 | 13.7 | 11.4 | 8.93 | 15.3 | 11.9 | 11.7 | 10.3 | - |
| | Tensile stress (MPa) | 20.7 | 19.3 | 14.8 | 18.4 | 18.4 | 17.4 | 19.5 | 20.5 | 21.0 | 15.9 | 15.7 | 18.4 | 22.0 | - |
| | Elongation rate (%) | 500 | 490 | 370 | 497 | 470 | 360 | 430 | 493 | 540 | 323 | 410 | 440 | 550 | - |

From Table 3, it was found that, in Examples 8, 11, 12, and 13, in which the carbon black and the molten mixture were mixed at the same blending amount, the vulcanization characteristics were different due to the change in the type of the silane coupling agent.

In addition, it was found that the stress in the low strain region of M25, M50, M100, and M200 was high in the blending of the molten mixture, but the stress and the elongation at the time of breakage were low.

(Examples 19 to 21 and Comparative Example 4)

A rubber composition was obtained in the same manner as in Example 1, except that the type and amount of the components were changed as shown in Table 4 in the section of "Production of rubber composition" described above. The same evaluations as in Example 1 were performed using the obtained rubber composition. In addition to the evaluations in Example 1, a loss coefficient and a loss elastic modulus were measured by the following methods. The results are shown in Table 4.

(Measurement of viscoelasticity)

Measuring device (manufactured by Ueshima Seisakusho Co., Ltd.; VR-7130)
Sample size (4 mm x 40 mm)
Measurement frequency: 10 Hz, measurement temperature conditions (0°C, 60°C)

Regarding the strain temperature dispersion, the strain was measured at ±2%. The values of the loss coefficient and the loss elastic modulus at 2% at a frequency of 10 Hz are described.

[Table 4]

| | | Example 19 | Example 20 | Example 21 | Comparative Example 4 |
|---|---|---|---|---|---|
| Formulation of rubber composition | | | | | |
| Natural rubber (SMR CV60) | | 100 | 100 | 100 | 100 |
| Carbon black (Asahi #60G) | | 30 | 20 | 10 | 40 |
| Molten mixture (A1) | | 10 | 20 | 30 | - |
| Silane coupling agent (NXT-Z45) | | 1 | 2 | 3 | - |
| Silane coupling agent (A1110) | | 0.5 | 1 | 1.5 | - |
| Evaluation of dispersibility | | ○ | ○ | ○ | - |
| Stearic acid | | 2 | 2 | 2 | 2 |
| Zinc oxide | | 5 | 5 | 5 | 5 |
| Refined mineral oil | | 15 | 15 | 15 | 15 |
| Sulfur | | 2.11 | 2.11 | 2.11 | 2.11 |
| Vulcanization accelerator (NS-P) | | 1 | 1 | 1 | 1 |
| Evaluation result | | | | | |
| Mooney viscosity (ML1 + 10) | | 27.5 | 35.0 | 41.7 | 25.2 |
| Vulcanization characteristics | t10 (min) | 2.13 | 1.16 | 0.93 | 3.65 |
| | t50 (min) | 2.93 | 1.86 | 1.65 | 4.90 |
| | t90 (min) | 4.63 | 3.18 | 3.00 | 6.96 |
| | ML (kgf·cm) | 0.22 | 0.30 | 0.33 | 0.18 |
| | MH (kgf·cm) | 2.10 | 2.23 | 1.79 | 1.99 |

(continued)

| Evaluation result | | | | | |
|---|---|---|---|---|---|
| Evaluation of physical properties of vulcanized rubber | M25 (MPa) | 1.00 | 1.80 | 3.00 | 0.50 |
| | M50 (MPa) | 2.40 | 4.30 | 5.90 | 0.90 |
| | M100 (MPa) | 4.10 | 6.30 | 7.80 | 1.70 |
| | M200 (MPa) | 6.20 | 8.30 | 9.60 | 4.40 |
| | M300 (MPa) | 9.60 | 10.90 | - | 8.10 |
| | Tensile stress (MPa) | 18.80 | 13.90 | 10.00 | 24.40 |
| | Elongation rate (%) | 480 | 390 | 240 | 610 |
| Loss coefficient tan δ | 0°C | 0.109 | 0.107 | 0.108 | 0.153 |
| | 60°C | 0.061 | 0.058 | 0.063 | 0.085 |
| Loss elastic modulus E2 | 0°C | 0.755 | 0.781 | 1.400 | 0.575 |
| | 60°C | 0.330 | 0.335 | 0.592 | 0.268 |

From Table 4, it was clarified that the value of the loss coefficient of the rubber composition blended with the molten mixture was small. In addition, it was found that low fuel consumption performance could be expected since the value of the loss coefficient (tan δ) was smaller than that of Comparative Example 4.

(Examples 22 to 24)

After weighing each component shown below, the paper powder (Examples 22 and 23) or the molten mixture (Example 24) and the silane coupling agent (C2 and C5) were mixed in advance to obtain a mixture. Next, the natural rubber (Example 22) or the synthetic rubber (Examples 23 and 24) was kneaded in a masticated state for 30 seconds using a Banbury mixer (manufactured by Toyo Seiki Seisaku-sho, Ltd., Labo Plastomill), and then the above-described mixture was put into the Banbury mixer and kneaded for 30 seconds. Next, after carbon black was put therein, the mixture was kneaded under a condition of 110°C, and the dispersibility was visually evaluated. Next, other components were put into the mixture, and the mixture was kneaded under a condition of 110°C to obtain a rubber composition.

· Natural rubber: 100 parts by mass
· Synthetic rubber (EPDM): 100 parts by mass
· Carbon black: 50 parts by mass
· Molten mixture (A1): 7.8 parts by mass
· Paper powder: 9 parts by mass
· Silane coupling agent (C2): 1 part by mass
· Silane coupling agent (C5): 0.5 parts by mass
· Stearic acid: 2 parts by mass
· Zinc oxide: 5 parts by mass
· Refined mineral oil: 15 parts by mass

[Table 5]

| | Example 22 | Example 23 | Example 24 |
|---|---|---|---|
| Formulation of rubber composition | | | |
| Natural rubber (SMR CV60) | 100 | - | - |
| EPDM (EP21) | - | 100 | 100 |
| Carbon black (Asahi #60G) | 40 | 40 | 40 |
| Paper powder | 9 | 9 | - |
| Molten mixture (A1) | - | - | 10 |
| Silane coupling agent (NXT-Z45) | 1 | 1 | 1 |

(continued)

| | | Example 22 | Example 23 | Example 24 |
|---|---|---|---|---|
| Formulation of rubber composition | | | | |
| Silane coupling agent (A1110) | | 0.5 | 0.5 | 0.5 |
| Evaluation of dispersibility | | ○ | ○ | ○ |
| Stearic acid | | 2 | 2 | 2 |
| Zinc oxide | | 5 | 5 | 5 |
| Refined mineral oil | | 15 | 15 | 15 |
| Sulfur | | 2.11 | 2.11 | 2.11 |
| Vulcanization accelerator (NS-P) | | 1 | 1 | 1 |
| Evaluation result | | | | |
| Mooney viscosity (ML1 + 10) | | 33.0 | 36.3 | 39.5 |
| Vulcanization characteristics | t10 (min) | 1.86 | 0.91 | 0.85 |
| | t50 (min) | 2.60 | 1.65 | 1.50 |
| | t90 (min) | 4.46 | 3.85 | 3.83 |
| | ML (kgf·cm) | 0.23 | 0.18 | 0.20 |
| | MH (kgf·cm) | 2.36 | 2.24 | 2.62 |
| Evaluation of physical properties of vulcanized rubber | M25 (MPa) | 0.80 | 1.30 | 2.40 |
| | M50 (MPa) | 1.50 | 2.10 | 4.10 |
| | M100 (MPa) | 2.60 | 3.80 | 6.40 |
| | M200 (MPa) | 5.90 | 6.50 | 8.90 |
| | M300 (MPa) | 10.3 | 9.4 | 12.0 |
| | Tensile stress (MPa) | 21.9 | 12.4 | 12.0 |
| | Elongation rate (%) | 540 | 400 | 300 |

It was found that the rubber compositions of Examples 22 to 24 were free of aggregates and were well dispersed.

From Comparative Example 1 and Examples 5, 14, and 22, when using the paper powder of microfibers, the vulcanization characteristics (t90) did not change regardless of the presence or absence of the blending, and the result was that the productivity did not improve. The tensile strength was equivalent to that of Comparative Example 1 in terms of the strength until breakage, but the stress in the low strain region was higher than that of Comparative Example 1, which was inferior to Examples 5 and 14.

In addition, it was found that, from Examples 23 and 24, t10 of the vulcanization characteristics was lower in Example 24, and the scorch was likely to occur in the molten mixture, but t90, which is an index of productivity, was not changed, and thus the productivity was not changed.

Furthermore, it was found that the breaking tensile strength and the breaking elongation were high in Example 23, and the strength in the low strain region was high in Example 24.

The evaluation of adhesiveness could be determined in the initial stage in which the elongation rate in the tensile strength was small, and from the results of M25, M50, and M100, it was found that the adhesiveness was improved.

## Claims

**1.** A rubber composition comprising:

(A) a rubber component;
(B-1) a molten mixture containing a natural nano-polymer; and
(C) a silane coupling agent having a mercapto group and a silane coupling agent having an amino group.

**2.** The rubber composition according to Claim 1,

wherein a moisture value of the molten mixture is smaller than 10.3%, and
a value of an average particle diameter D50 of the molten mixture is smaller than 10,500 μm.

**3.** A rubber composition comprising:

(A) a rubber component;
(B-2) a cellulose fiber; and
(C) a silane coupling agent having a mercapto group and a silane coupling agent having an amino group.

**4.** A rubber composition comprising:

(A) a rubber component;
(B-1) a molten mixture containing a natural nano-polymer and an aqueous dispersion of a polyolefin resin; and
(C) a silane coupling agent having a mercapto group.

**5.** A rubber composition comprising:

(A) a rubber component;
(B-1) a molten mixture containing a natural nano-polymer and an aqueous dispersion of a polyolefin resin; and
(C) a silane coupling agent having a mercapto group and a silane coupling agent having an amino group.

**6.** A rubber composition comprising:

(A) a rubber component;
(B-1) a molten mixture containing a natural nano-polymer and a polymerized substance which contains, as a main component, a vinyl aromatic compound having a weight-average molecular weight in a range of 200 or more and 5,000 or less; and
(C) a silane coupling agent having a mercapto group and a silane coupling agent having an amino group.

[FIG. 1]

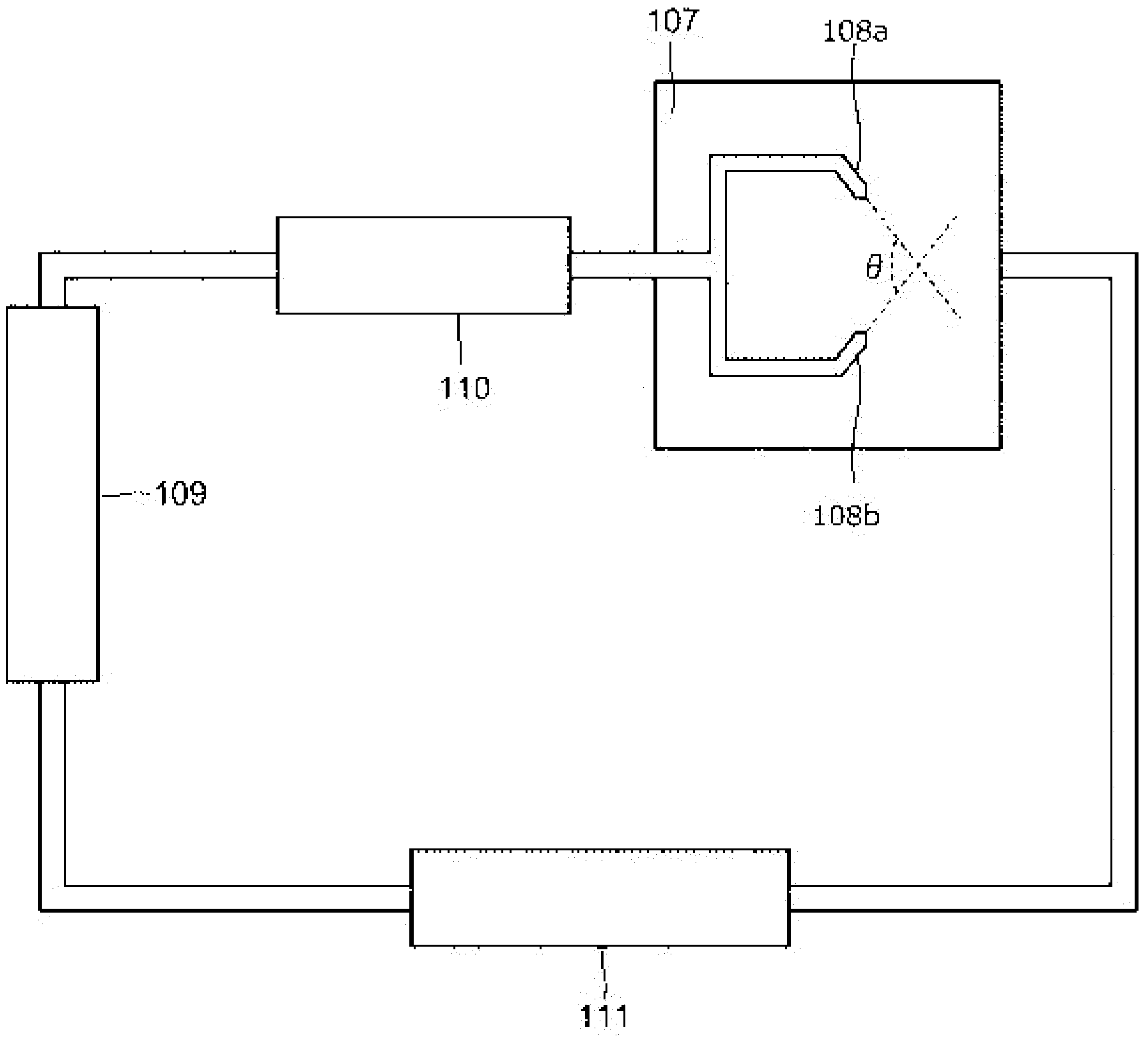

**INTERNATIONAL SEARCH REPORT**

International application No.
**PCT/JP2023/040620**

**A. CLASSIFICATION OF SUBJECT MATTER**

***C08L 21/00***(2006.01)i; ***C08J 3/20***(2006.01)i; ***C08K 5/544***(2006.01)i; ***C08K 5/548***(2006.01)i; ***C08L 1/02***(2006.01)i; ***C08L 23/00***(2006.01)i; ***C08L 25/00***(2006.01)i
FI: C08L21/00; C08L1/02; C08K5/548; C08K5/544; C08J3/20 Z CEQ; C08L23/00; C08L25/00

According to International Patent Classification (IPC) or to both national classification and IPC

**B. FIELDS SEARCHED**

Minimum documentation searched (classification system followed by classification symbols)

C08L21/00; C08J3/20; C08K5/544; C08K5/548; C08L1/02; C08L23/00; C08L25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-115023 A (SEIKO PMC CORP) 29 June 2017 (2017-06-29) paragraphs [0071]-[0072], [0082], table 2, application reference example 4-a, etc. | 1-3 |
| X | JP 2021-014512 A (UNIV SHINSHU) 12 February 2021 (2021-02-12) paragraphs [0053]-[0057], table 1, 5, examples 3, 11, 13, etc. | 3 |
| X | JP 2021-014509 A (UNIV SHINSHU) 12 February 2021 (2021-02-12) paragraphs [0050]-[0054], tables 1, 5, examples 3, 11, 13, etc. | 3 |
| A | WO 2020/241644 A1 (CHUETSU-PULP AND PAPER CO., LTD.) 03 December 2020 (2020-12-03) | 1-6 |
| A | WO 2020/240935 A1 (CHUETSU-PULP AND PAPER CO., LTD.) 03 December 2020 (2020-12-03) | 1-6 |
| A | JP 2017-141323 A (DAINICHISEIKA COLOR CHEM) 17 August 2017 (2017-08-17) | 1-6 |
| A | JP 2017-105983 A (UNIV KYOTO) 15 June 2017 (2017-06-15) | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2023** | **12 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

**INTERNATIONAL SEARCH REPORT**

International application No.
**PCT/JP2023/040620**

**C. DOCUMENTS CONSIDERED TO BE RELEVANT**

| Category* | Citation of document, with indication, where appropriate, of the relevant passages | Relevant to claim No. |
|---|---|---|
| A | JP 2022-120935 A (YOKOHAMA RUBBER CO LTD) 19 August 2022 (2022-08-19) | 1-6 |
| A | JP 2018-111769 A (NISSIN KOGYO KK) 19 July 2018 (2018-07-19) | 1-6 |
| A | WO 2021/075224 A1 (NATIONAL UNIVERSITY CORPORATION SHIZUOKA UNIVERSITY) 22 April 2021 (2021-04-22) | 1-6 |
| P, A | WO 2023/188300 A1 (CHUETSU-PULP AND PAPER CO., LTD.) 05 October 2023 (2023-10-05) | 1-6 |
| P, A | JP 7175429 B1 (CHUETSU-PULP AND PAPER CO., LTD.) 18 November 2022 (2022-11-18) | 1-6 |

Form PCT/ISA/210 (second sheet) (January 2015)

**INTERNATIONAL SEARCH REPORT**
**Information on patent family members**

International application No.
**PCT/JP2023/040620**

| Patent document cited in search report | Publication date (day/month/year) | Patent family member(s) | Publication date (day/month/year) |
|---|---|---|---|
| JP 2017-115023 A | 29 June 2017 | (Family: none) | |
| JP 2021-014512 A | 12 February 2021 | (Family: none) | |
| JP 2021-014509 A | 12 February 2021 | (Family: none) | |
| WO 2020/241644 A1 | 03 December 2020 | EP 3978561 A1<br>CN 113891910 A | |
| WO 2020/240935 A1 | 03 December 2020 | EP 3978561 A1<br>CN 113891910 A | |
| JP 2017-141323 A | 17 August 2017 | (Family: none) | |
| JP 2017-105983 A | 15 June 2017 | US 2018/0362405 A1<br>CN 108368347 A | |
| JP 2022-120935 A | 19 August 2022 | (Family: none) | |
| JP 2018-111769 A | 19 July 2018 | CN 108299701 A | |
| WO 2021/075224 A1 | 22 April 2021 | EP 4047040 A1<br>CN 114585666 A | |
| WO 2023/188300 A1 | 05 October 2023 | (Family: none) | |
| JP 7175429 B1 | 18 November 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006206864 A
- JP 2009191198 A
- WO 1904682 A


### Non-patent literature cited in the description


- Powder Fluidity Measurement Method. *Journal of the Japanese Society of Radiological Technology*, vol. 46 (6), 472-477